# EUROPÄISCHE PATENTSCHRIFT

(11) **EP 1 671 048 B1**
(45) Veröffentlichungstag und Bekanntmachung des Hinweises auf die Patenterteilung: **02.11.2016**
(21) Anmeldenummer: 04765471.0
(22) Anmeldetag: 21.09.2004
(51) Int. Cl.: F16F 15/134

(54) **DREHSCHWINGUNGSISOLATOR**
TORSIONAL VIBRATION ISOLATOR
ISOLATEUR D'OSCILLATIONS DE ROTATION

(30) Priorität: 06.10.2003 DE 10346251
(43) Veröffentlichungstag der Anmeldung: 21.06.2006
(73) Patentinhaber: Bayerische Motoren Werke Aktiengesellschaft, 80809 München (DE)
(72) Erfinder: RONNER, Gerhard, 84104 Hebrontshausen (DE)
(86) Internationale Anmeldenummer: PCT/EP2004/010598
(87) Internationale Veröffentlichungsnummer: WO 2005/036023

(56) Entgegenhaltungen:
- DE-A- 3 831 009
- DE-A- 4 040 605
- FR-A- 2 829 819
- FR-A1- 2 794 832
- US-A1- 2002 147 051

## Beschreibung

Die vorliegende Erfindung betrifft einen Drehschwingungsisolator gemäß dem Oberbegriff des Patentanspruches 1.

Ein derartiger Drehschwingungsisolator ist aus der FR 2 794 832 A1 bekannt. Zum relevanten Stand der Technik zählt ferner die FR 2 829 819 A1.

Bei Fahrzeugen mit Verbrennungsmotor treten aufgrund der intermittierenden Arbeitsweise des Motors im Antriebsstrang Drehschwingungen auf. Zur "Isolation" und Dämpfung dieser Drehschwingungen werden seit geraumer Zeit Zweimassenschwungräder eingesetzt, die üblicherweise zwischen dem Motor und dem Getriebeeingang angeordnet sind. Ein solches Zweimassenschwungrad ist beispielsweise aus der DE 197 00 851 A1 und der DE 195 22 718 A1 bekannt.

Stark vereinfacht ausgedrückt bestehen Zweimassenschwungräder aus einem Primärelement und einem Sekundärelement, die bezüglich einer Drehachse relativ zueinander verdrehbar sind. In einer Umfangsrichtung der Drehachse sind zwischen dem Primärelement und dem Sekundärelement in Umfangsrichtung verteilt mehrere schraubenfederartige Federelemente angeordnet. Die Federelemente sind in Umfangsrichtung bogenartig gekrümmt und werden daher auch als "Bogenfedern" bezeichnet. Bei einer Relativverdrehung des Primärelementes gegenüber dem Sekundärelement werden die bogenartigen Federelemente zusammengedrückt.

In Radialrichtung werden die Bogenfedern von außen her jeweils durch eine "schalenartige Ausnehmung", z.B. ein Abstützblech, das am Primärelement bzw. am Sekundärelement angeordnet ist, abgestützt. Dadurch wird verhindert, dass die Bogenfedern beim Zusammendrücken radial nach aussen "ausweichen". Zwischen den Bogenfedern und den sie in Radialrichtung abstützenden Ausnehmungen bzw. Blechschalen entstehen Reibungskräfte. Die Reibungskräfte sind einerseits darauf zurückzuführen, dass die Bogenfedern in Umfangsrichtung bogenartig gekrümmt sind und die an den Enden der Bogenfedern angreifenden Abstützkräfte nicht in einer Linie liegen, sondern sich unter einem bestimmten Winkel schneiden, was zu einer resultierenden Bogenfederradialkraft führt. Hinzu kommt, dass sich ein Zweimassenschwungrad mit hoher Drehzahl dreht. Dadurch entstehen in Radialrichtung wirkende Fliehkräfte, welche die Bogenfedern zusätzlich nach außen pressen.

Versuche haben gezeigt, dass die Torsionssteifigkeit eines Zweimassenschwungrades im dynamischen Betrieb (hohe Drehzahl) um bis zu 40 größer ist als im statischen Betrieb (Stillstand bzw. geringe Drehzahl), was primär auf die an den Bogenfedern angreifenden Fliehkräfte und die dadurch hervorgerufenen Reibkräfte zurückzuführen ist. Bei hohen Drehzahlen ist zu beobachten, dass die Bogenfedern aufgrund der Fliehkraftreibung selbst bei einer Drehmomententlastung des Zweimassenschwungrads an den sie in Radialrichtung abstützenden Reibschalen bzw. Ausnehmungen "klebern" bleiben und sich nicht entsprechend der Drehmomententlastung entspannen, sondern erst bei einer Drehzahlabsenkung "schlagartig" entspannen, was vorübergehend zu einem unerwünschten Spiel im Antriebsstrang führt. Dies führt zu Schwingungsproblemen, wie zum Beispiel Getrieberasseln, Schubbrummen oder ganz allgemein zu Vibrationen. Zur Vermeidung dieser Probleme und zur Verringerung des Verschleiß zwischen den Bogenfedern und den Reibschalen bzw. Ausnehmungen, in denen die Bogenfedern angeordnet sind, sind die Ausnehmungen häufig mit Schmierfett gefüllt, was die oben genannten Probleme mildert aber nicht beseitigt.

Aufgabe der Erfindung ist es, einen Drehschwingungsisolator zu schaffen, bei dem die oben erläuterten Probleme vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Drehschwingungsisolator für einen Antriebsstrang eines Fahrzeugs aus. Der Drehschwingungsisolator weist ein Primärelement und ein Sekundärelement auf, die bezüglich einer Drehachse relativ zueinander verdrehbar sind. Das Primärelement bildet den "Drehmomenteingang" und das Sekundärelement den "Drehmomentausgang" des Drehschwingungsisolators. Ferner sind mindestens zwei "Federelemente" vorgesehen, die sich bogenartig in einer Umfangsrichtung der Drehachse erstrecken. Die Federelemente können durch Schraubenfedern gebildet sein, die aufgrund ihrer Krümmung in Umfangsrichtung dann auch als "Bogenfedern" bezeichnet werden. Die Federelemente bzw. Bogenfedern sind von einer radialen Außenseite her jeweils durch eine "radiale Abstützeinrichtung" abgestützt. Jeweils ein erstes Ende eines jeden Federelements ist durch das Primärelement und jeweils ein zweites Ende eines jeden Federelements ist durch das Sekundärelement in Umfangsrichtung abgestützt. In Umfangsrichtung gesehen ist die Länge der Federelemente bei einer Verdrehung des Primärelements in bezug auf das Sekundärelement veränderbar. "Veränderbar bedeutet, dass die Federelemente bei einer Relativverdrehung des Primärelements in bezug auf das Sekundärelement zusammengedrückt werden.

Der Kern der Erfindung besteht in der Gestaltung der radialen Abstützeinrichtungen, die beim Zusammendrücken der bogenartigen Federelementr ein radiales "Ausweichen" der Federelemente verhindern. Die radialen Abstützeinrichtungen gemäß der Erfindung weisen mehrere an der radialen Außenseite der Federelemente anliegende Abstützelemente auf. Die Abstützelemente sind in Umfangsrichtung verdrehbar angeordnet. Verdrehbar bedeutet in diesem Zusammenhang, dass sie sich bei einer Längenänderung der Federelemente, das heißt bei einer Verdrehung des Primärelementes in bezug auf das Sekundärelement in Umfangsrichtung mit den Federelementen mitbewegen können.

Im Unterschied zu herkömmlichen "Anordnungen, bei denen beim Zusammendrücken und Entspannen der Bogenfedern eine Relativbewegung der Bogenfedern in Bezug auf die Reibbleche bzw. die Ausnehmungen auftritt, welche die Bogenfedern radial abstützen, wird gemäß der Erfindung eine solche Relativbewegung vermieden. Somit werden die bei herkömmlichen Drehschwingungsisolatoren insbesondere bei höheren Drehzahlen verstärkt auftretenden "Reibungsprobleme" an den Bogenfedern und den "Reibschalen" bzw. Ausnehmungen, in denen die Bogenfedern angeordnet und radial abgestützt sind, vollständig vermieden. Auf eine "Fettschmierung" der Bogenfedern kann bei einer Anordnung gemäß der Erfindung verzichtet werden. Mit der Erfindung wird also eine weitgehend reaktionskraftfreie Kompression und Entspannung der Bogenfedern entsprechend dem momentan übertragenen Drehmoment erreicht. Die Drehzahl des Drehschwingungsisolators hat also praktisch keinen Einfluss mehr auf das Kompressions- bzw. Entspannungsverhalten der Bogenfedern.

Die Abstützelemente können beispielsweise U-förmig oder klammerartig ausgebildet sein und die Federelemente (Bogenfedern) klammerartig radial von außen her umgreifen. Die Abstützelemente können durch U-förmig gebogene Bleche gebildet sein.

Nach einer Weiterbildung der Erfindung sind zwei oder mehr der vorgesehenen Abstützelemente über ein gemeinsames auf der Drehachse angeordnetes Halteelement miteinander verbunden. Ein erstes dieser Abstützelemente ist dem ersten Federelement bzw. der ersten Bogenfeder zugeordnet und ein zweites dieser Abstützelemente ist dem zweiten Federelement bzw. der zweiten Bogenfeder zugeordnet. Die beiden Abstützelemente sind über das Halteelement miteinander verbunden, und zwar derart, dass sich die an den Abstützelementen des Halteelements angreifenden radialen Abstützkräfte gegeneinander aufheben.

Vorzugsweise ist jedes der Abstützelemente formschlüssig und somit in Umfangsrichtung gegen Verrutschen gesichert mit dem zugeordneten Federelement verbunden. Wenn die Federelemente Schraubenfedern sind, können die Abstützelemente jeweils von außen her auf einzelne Windungen der Schraubenfedern aufgesetzt sein. Um ein Verrutschen der Abstützelemente zu vermeiden, kann vorgesehen sein, dass Windungen der Schraubenfedern in Ausnehmungen bzw. Nuten, die in den einzelnen Abstützelementen vorgesehen sind, formschlüssig eingerastet sind.

Im folgenden wird die Erfindung im Zusammenhang mit der Zeichnung näher erläutert. Es zeigen:

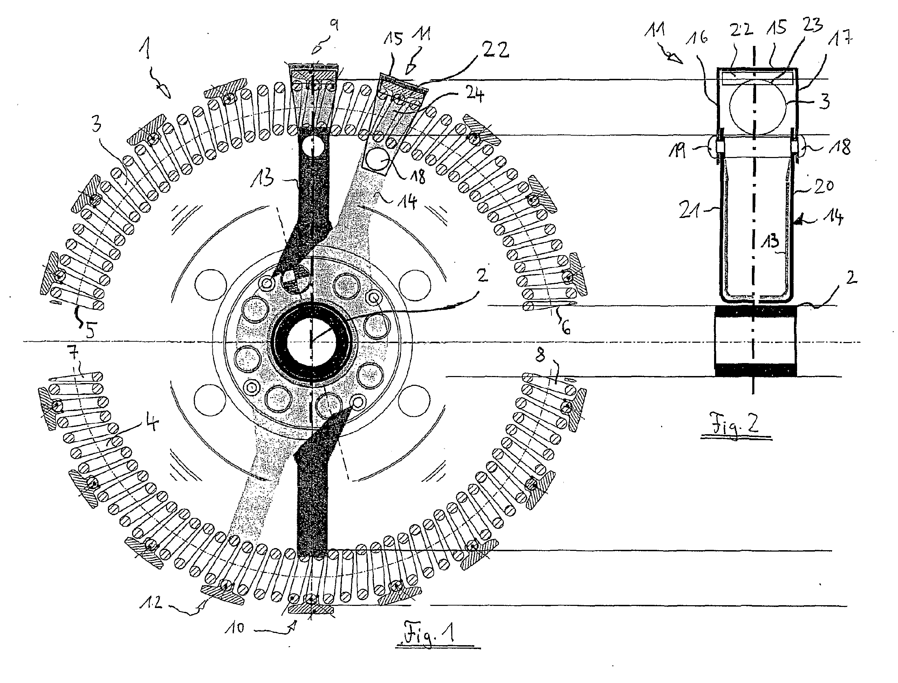

- Figur 1 - 4: verschiedene schematische Darstellungen des Grundprinzips der Erfindung.

Figur 1 zeigt in schematischer Darstellung einen Drehschwingungsisolator 1, der, wie an sich bekannt, ein hier nicht näher dargestelltes Primärelement und ein hier nicht näher dargestelltes Sekundärelement ausweist. Das Primärelement und das Sekundärelement sind bezüglich einer Drehachse 2 relativ zueinander verdrehbar. Das Primärelement bildet beispielsweise einen Drehmomenteingang und das Sekundärelement einen Drehmomentausgang des Drehschwingungsisolators 1.

Ferner sind ein erstes Federelement 3 und ein zweites Federelement 4 vorgesehen, die sich jeweils in Umfangsrichtung der Drehachse 2 erstrecken. Die Federelemente 3, 4 sind hier durch Schraubenfedern gebildet. Sie sind kreisbogenartig angeordnet und erstrecken sich bei dem hier gezeigten Ausführungsbeispiel jeweils über einen Umfangsabschnitt von nahezu 180°. Die erste "Bogenfeder" 3 weist ein erstes Ende 5 und ein zweites Ende 6 auf. Dementsprechend weist die zweite Bogenfeder 4 ein erstes Ende 7 und ein zweites Ende 8 auf. Die ersten Enden 5, 7 sind in Umfangsrichtung jeweils durch das Primärelement (nicht dargestellt) und die zweiten Enden 6, 8 sind in Umfangsrichtung durch das Sekundärelement (nicht dargestellt) des Drehschwingungsisolators abgestützt. Drehmoment wird vom Primärelement über das Federelement 3 und über das Federelement 4 auf das Sekundärelement übertragen. In Abhängigkeit von der Größe des übertragenen Drehmoments verdrehen sich das Primärelement und das Sekundärelement relativ zueinander. Dies führt dazu, dass die beiden Federelemente in Umfangsrichtung zusammengedrückt werden.

Da die Federelemente 3, 4 bogenartig gekrümmt sind, entstehen beim Zusammendrücken nach außen wirkende Radialkräfte. Um ein radiales Ausweichen der Federelemente 3, 4 zu verhindern, müssen sie in Radialrichtung abgestützt werden. Hierzu sind in Umfangsrichtung verteilt angeordnete Abstützelemente 9, 10 bzw. 11, 12 vorgesehen. Die Abstützelemente 9, 11 sind der ersten Bogenfeder 3 und die Abstützelemente 10, 12 sind der zweiten Bogenfeder 4 zugeordnet. Die Abstützelemente 9 und 10 sind über ein zweiarmiges Halteelement 13, das in Umfangsrichtung relativ biegesteif ist, miteinander verbunden. Die Abstützelemente 11, 12 sind über ein entsprechendes Halteelement 14 miteinander verbunden.

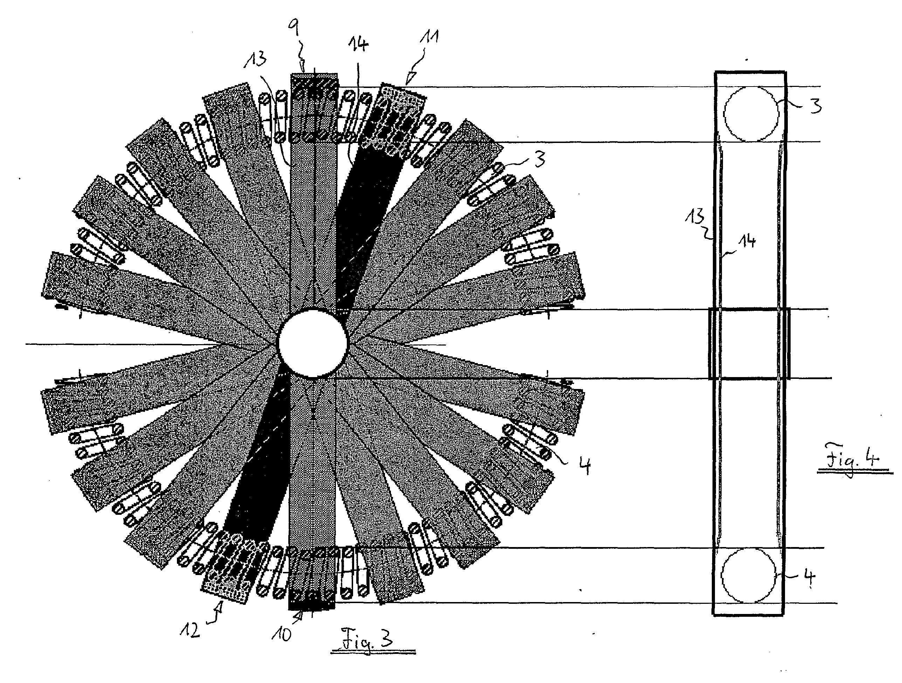

Die Halteelemente 13, 14 sind drehbar auf der Drehachse 2 angeordnet. Sie können sich bei einer Längenänderung der Bogenfedern 3, 4, das heißt bei einer Stauchung bzw. bei einer Entspannung der Bogenfedern 3, 4 nahezu ungehindert mitbewegen. Wie aus Figur 3 ersichtlich ist, sind jeweils zwei einander gegenüberliegende Abstützelemente 9, 10 bzw. 11, 12 über ein zugeordnetes Halteelement 13 bzw. 14 miteinander verbunden. Die Halteelemente, von denen hier nur die beiden Halteelemente 13, 14 explizit mit Bezugszeichen bezeichnet sind, überlappen sich fächerartig, was am Besten aus den **Figuren 1** **und** **3** ersichtlich ist.

Wie aus den **Figuren 1 und 2** ersichtlich ist, weisen die Abstützelemente 9 - 12 jeweils ein U-förmig gebogenes Blechelement 15 auf, dessen beiden Schenkel 16, 17 bei dem hier gezeigten Ausführungsbeispiel über eine Nietverbindung 18, 19 mit zugeordneten Schenkeln 20, 21 des Halteelementes 14 verbunden sind. Die Abstützelemente 9-12 weisen ferner ein clipartiges Element 22 auf, an dessen Innenseite eine nutartige Ausnehmung 23 vorgesehen ist, in die eine Windung 24 der Bogenfeder 3 eingreift. Das Abstützelement 11 ist somit in Umfangsrichtung formschlüssig gegen Verrutschen auf der zugeordneten Bogenfeder gesichert.

Alternativ zu dem hier gezeigten Ausführungsbeispiel, bei dem zwei Bogenfedern vorgesehen sind, können auch drei oder mehr über den Umfang verteilt angeordnete Bogenfedern vorgesehen sein. Im Falle von drei oder mehr Bogenfedern können die Halteelemente dementsprechend drei- bzw. mehrarmig ausgebildet sein, wobei am Ende der Arme jeweils ein Abstützelement vorgesehen ist.

**Figur 4** zeigt die Anordnung der **Figur 3** schematisch in einer Stirnansicht. Von den in Figur 3 gezeigten Haltelementen sind lediglich die Halteelemente 13, 14 explizit dargestellt.

## Patentansprüche

1. Drehschwingungsisolator (1) für einen Antriebsstrang eines Fahrzeugs, mit
einem Primärelement und einem Sekundärelement, die bezüglich einer Drehachse (2) relativ zueinander verdrehbar sind,
mindestens zwei Federelementen (3, 4), die sich bogenartig in einer Umfangsrichtung der Drehachse (2) erstrecken und die von einer radialen Außenseite her durch jeweils eine radiale Abstützeinrichtung (9 - 12) abgestützt sind, wobei jeweils ein erstes Ende (5, 7) der Federelemente (3, 4) durch das Primärelement und jeweils ein zweites Ende (6, 8) der Federelemente (3, 4) durch das Sekundärelement in Umfangsrichtung abgestützt ist und in Umfangsrichtung gesehen die Länge der beiden Federelemente (3, 4) bei einer Verdrehung des Primärelements in bezug auf das Sekundärelement veränderbar ist, wobei die radialen Abstützeinrichtungen der Federelemente mehrere an der radialen Außenseite der Federelemente angreifende Abstützelemente (9 12) aufweisen, die in Umfangsrichtung verdrehbar angeordnet sind, derart, dass sie sich bei einer Längenänderung der Federelemente (3, 4) in Umfangsrichtung mit den Federelementen (3, 4) mitbewegen können,
wobei mindestens zwei der Abstützelemente (9 - 12), von denen ein erstes (9) dem ersten Federelement (3) und ein zweites (10) dem zweiten Federelement (4) zugeordnet ist, über ein gemeinsames auf der Drehachse (2) angeordnetes Halteelement (13, 14) miteinander verbunden sind, derart, dass sich die an den Abstützelementen (9, 10) des Halteelements (13, 14) angreifenden radialen Abstützkräfte gegeneinander aufheben,
**dadurch gekennzeichnet, dass**
mehrere Halteelemente (13, 14) sich fächerartig überlappen.

2. Drehschwingungsisolator (1) nach Anspruch 1, wobei die Abstützelemente (9 - 12) U-förmig sind und die Federelemente (3, 4) jeweils klammerartig radial von außen her umgreifen.

3. Drehschwingungsisolator (1) nach Anspruch 1 oder 2, wobei die Abstützelemente (9 - 12) jeweils ein U-förmig gebogenes Blechelement (15 - 17) aufweisen, das jeweils das zugeordnete Federelement (3, 4) radial von außen her umgreift.

4. Drehschwingungsisolator (1) nach einem der Ansprüche 1 bis 3, wobei jedes der Abstützelemente (9 - 12) formschlüssig gegen Verrutschen in Umfangsrichtung mit dem zugeordneten Federelement (3, 4) verbunden ist.

5. Drehschwingungsisolator (1) nach einem der Ansprüche 1 bis 4, wobei die Federelemente (3, 4) durch Schraubenfedern gebildet sind.

6. Drehschwingungsisolator (1) nach Anspruch 5, wobei jedes der Abstützelemente jeweils von außen her auf mindestens eine Windung (24) der zugeordneten Schraubenfeder (3) aufgesetzt ist, wobei die mindestens eine Windung (24) formschlüssig in das Abstützelement (9-11) eingerastet ist.

7. Drehschwingungsisolator (1) nach einem der Ansprüche 1 bis 6, wobei mehr als zwei sich jeweils über einen bogenartigen Umfangsabschnitt erstreckende Federelemente (3, 4) vorgesehen sind, die radial von außen her jeweils durch mehrere Abstützelemente (9 - 12) abgestützt sind, wobei mehrere koaxial zur Drehachse angeordnete Halteelemente (13, 14) vorgesehen sind, die jeweils eine der Anzahl der Federelemente (3, 4) entsprechende Anzahl von radial abstehenden Armen aufweisen, wobei jedes Halteelement (13, 14) für jedes der Federelemente (3, 4) jeweils einen zugeordneten Arm aufweist und an den freien Enden der Arme jeweils ein Abstützelement (9 - 12) vorgesehen ist.

## Claims

1. A torsional vibration insulator (1) for a drive train of a vehicle, comprising a primary element and a secondary element which can be rotated relative to one another with respect to a rotational axis (2),
at least two spring elements (3, 4) which extend in an arched manner in a circumferential direction of the rotational axis (2) and which are supported from a radial outer face by a respective radial support means (9 -12), wherein a respective first end (5, 7) of the spring elements (3, 4) is supported by the primary element and a respective second end (6, 8) of the spring elements (3, 4) is supported by the secondary element in the circumferential direction and, seen in the circumferential direction, the length of the two spring elements (3, 4) can be changed when the primary element is rotated relative to the secondary element, wherein the radial support means of the spring elements have a plurality of support elements (9 - 12) which engage on the radial outer face of the spring elements and are arranged rotatably in the circumferential direction such that they can move together with the spring elements (3, 4) in the circumferential direction when the length of the spring elements (3, 4) is changed,
wherein at least two of the support elements (9 - 12), of which a first support element (9) is associated with the first spring element (3) and a second support element (10) is associated with the second spring element (4), are Interconnected by a common holding element (13, 14), arranged on the rotational axis (2) such that the radial supporting forces engaging on the support elements (9, 10) of the holding element (13, 14) cancel each other out,
**characterised In that**
a plurality of holding elements (13, 14) overlap one another in the manner of a fan.

2. A torsional vibration insulator (1) according to claim 1, wherein the support elements (9 - 12) are U-shaped and respectively encompass the spring elements (3, 4) radially from outside in a bracket-like manner.

3. A torsional vibration insulator (1) according to claim 1 or claim 2, wherein the support elements (9 -12) have a respective sheet element (15 - 17) which is curved in a U shape and respectively encompasses the associated spring element (3, 4) radially from outside.

4. A torsional vibration insulator (1) according to any one of claims 1 to 3, wherein each of the support elements (9 - 12) is positively connected to the associated spring element (3, 4) to prevent slipping in the circumferential direction.

5. A torsional vibration insulator (1) according to any one of claims 1 to 4, wherein the spring elements (3, 4) are formed by helical springs.

6. A torsional vibration insulator (1) according to claim 5, wherein each of the support elements is respectively placed from outside on at least one winding (24) of the associated helical spring (3), wherein the at least one winding (24) is latched positively Into the support element (9 - 11).

7. A torsional vibration insulator (1) according to any one of claims 1 to 6, wherein more than two spring elements (3, 4) are provided which respectively extend over an arch-like circumferential portion and are supported radially from outside in each case by a plurality of support elements (9 - 12), wherein a plurality of holding elements (13, 14) are provided which are arranged coaxially to the rotational axis and have in each case a number of radially projecting arms, which number corresponds to the number of the spring elements (3, 4), wherein each holding element (13, 14) has a respective associated arm for each of the spring elements (3, 4), and a respective support element (9 -12) is provided at the free ends of the arms.

## Revendications

1. Isolateur d'oscillations de rotation (1) pour la ligne de transmission d'un véhicule comportant :
- un élément primaire et un élément secondaire qui peuvent tourner l'un par rapport à l'autre selon l'axe de rotation (2),
- au moins deux éléments de ressort (3, 4) qui s'étendent en forme d'arc de cercle dans la direction périphérique de l'axe de rotation (2) et sont appuyés par le côté extérieur radial par chaque fois une installation d'appui radial (9-12),
* chaque fois une première extrémité (5, 7) de l'élément de ressort (3, 4) étant appuyée par l'élément primaire et chaque fois une seconde extrémité (6, 8) de l'élément de ressort (3, 4) étant appuyée par l'élément secondaire dans la direction périphérique et selon la direction périphérique, la longueur des deux éléments de ressort (3, 4) varie lorsque l'élément primaire tourne par rapport à l'élément secondaire,
* les installations d'appui radial des éléments de ressort ayant plusieurs éléments d'appui (9-12) agissant sur le côté extérieur radial des éléments de ressort, ces éléments d'appui étant disposés de façon à tourner dans la direction périphérique pour qu'en cas de variation de longueur des éléments de ressort (3, 4) ils puissent suivre les éléments de ressort (3, 4) dans la direction périphérique,
* au moins deux éléments d'appui (9-12) dont un premier élément d'appui (9) est associé au premier élément de ressort (3) et un second élément d'appui (10) est associé au second élément de ressort (4), sont reliés l'un à l'autre par un élément de maintien (13, 14) installé en commun sur l'axe de rotation (2) de façon que les forces radiales d'appui agissant sur les éléments d'appui (9, 10) de l'élément de maintien (13, 14) se compensent,
isolateur **caractérisé en ce que**
plusieurs éléments de maintien (13, 14) se chevauchent en éventail.

2. Isolateur d'oscillation de rotation (1) selon la revendication 1,
**caractérisé en ce que**
les éléments d'appui (9-12) ont une forme de U et ils entourent chacun en forme de pince, radialement à partir de l'extérieur les éléments de ressort (3, 4).

3. Isolateur d'oscillations de rotation (1) selon la revendication 1 ou 2,
**caractérisé en ce que**
les éléments d'appui (9-12) ont chacun un élément de tôle (15-17) cintrée en forme de U et qui entoure radialement à partir de l'extérieur chaque élément de ressort (3, 4) associé.

4. Isolateur d'oscillations de rotation (1) selon l'une des revendications 1 à 3,
**caractérisé en ce que**
chaque élément d'appui (9-12) est relié à l'élément de ressort (3, 4) associé par une liaison par la forme pour éviter le glissement dans la direction périphérique.

5. Isolateur d'oscillations de rotation (1) selon l'une des revendications 1 à 4,
**caractérisé en ce que**
les éléments de ressort (3, 4) sont des ressorts hélicoïdaux.

6. Isolateur d'oscillations de rotation (1) selon la revendication 5,
**caractérisé en ce que**
- chaque élément d'appui est installé respectivement à partir de l'extérieur sur au moins une spire (24) du ressort hélicoïdal (3) associé, et
- au moins la spire (24) est accrochée à l'élément d'appui (9-11) par une liaison par la forme.

7. Isolateur d'oscillations de rotation (1) selon l'une des revendications 1 à 6,
**caractérisé en ce qu'**
il comporte plus de deux éléments de ressort (3, 4) s'étendant chaque fois sur un segment périphérique en forme d'arc de cercle, ces éléments de ressort étant appuyés radialement de l'extérieur chacun par plusieurs éléments d'appui (9-12),
* plusieurs éléments de maintien (13, 14) installés axialement à l'axe de rotation ayant chacun un nombre d'éléments de ressort (3, 4) correspondant au nombre de bras venant radialement en saillie,
* pour chaque élément de ressort (3, 4) chaque élément de maintien (13, 14) a respectivement un bras associé et l'extrémité libre des bras comporte respectivement un élément d'appui (9-12).
